**Europäisches Patentamt**

**European Patent Office**

**Office européen des brevets**

(19)

(11) Veröffentlichungsnummer: **0 067 265**
**A1**

(12) ## EUROPÄISCHE PATENTANMELDUNG

(21) Anmeldenummer: **81810239.4**

(22) Anmeldetag: **12.06.81**

(51) Int. Cl.³: **F 16 F 15/30**

(43) Veröffentlichungstag der Anmeldung:
**22.12.82 Patentblatt 82/51**

(84) Benannte Vertragsstaaten:
**AT BE DE FR GB IT LU NL SE**

(71) Anmelder: **Haas, Volkmann Eduard**
**Herrengrabenweg 75**
**CH-4054 Basel(CH)**

(72) Erfinder: **Haas, Volkmann Eduard**
**Herrengrabenweg 75**
**CH-4054 Basel(CH)**

(54) **Verfahren und Einrichtung zur Speicherung kinetischer Energie in einer Schwungmasse.**

(57) Das Schwungrad besitzt vier obere (1) und vier untere (1a) bewegliche Masseteile, die sich unter der Wirkung der Zentrifugalkraft zwischen einer minimalen und maximalen Abstandslage vom Drehzentrum (3) einstellen. Dadurch variiert auch das Massenträgheitsmoment der Schwungmasse zwischen einem minimalen und maximalen Wert.

Bei bekannten Schwungmassen ist das Trägheitsmoment konstant und bestimmt die Höhe des erforderlichen Antriebsmomentes. Im Gegensatz dazu muss das vorgeschlagene Schwungrad — beim Anfahren oder beim Erhöhen abgesunkener Drehzahl — nur ein reduziertes Trägheitsmoment überwinden, sodass nun ein reduziertes Antriebsmoment ausreicht.

Umgekehrt lässt sich bei gegebenem Antriebsmoment im Endeffekt eine grössere Speicherkapazität erreichen.

Das Verfahren und das Schwungrad lassen sich vor allem bei elektrischen Antrieben, insbesondere mit Batterie oder Akkumulator, anwenden.

Fig. 1

Fig. 2

./...

Fig. 3

Fig. 4

Fig. 5

- 1 -

<u>Verfahren und Einrichtung zur Speicherung</u>
<u>kinetischer Energie in einer Schwungmasse</u>

Die bekannten Gyro- und andere Schwungradantriebe besitzen ein konstantes Massenträgheitsmoment. Dies wirkt sich insofern ungünstig aus, als sowohl beim Anfahren wie auch beim Erhöhen von durch Leistungsabgabe reduzierten Drehzahlen ein relativ hohes, vom Trägheitsmoment des Schwungrades abhängiges Antriebsmoment erforderlich ist.

Das Ziel der Erfindung besteht darin, diese durch konstantes Trägheitsmoment der Schwungmasse bedingten Nachteile zu beheben. Dies wird erfindungsgemäss durch das Verfahren mit den Merkmalen des Patentanspruches 1 und durch die Einrichtung mit den Merkmalen des Patentanspruches 3 erreicht.

Im Ruhestand und vorzugsweise auch bei kleineren Drehzahlen verharren die beweglichen Masseteile zunächst in Zentrumsnähe. Da das Trägheitsmoment noch klein ist, genügt ein kleineres Antriebsmoment. Mit zunehmender Drehzahl und zunehmender Zentrifugalkraft werden die beweglichen Masseteile nach aussen bewegt, sodass sich nun ein maximales Trägheitsmoment mit entsprechend erhöhter Energiespeicherungskapazität der Schwungmasse einstellt. Bei Belastung verringert sich andrerseits die Auslenkung der Masse teile mit reduzierter Drehzahl, sodass sich auch das Trägheitsmoment reduziert, weshalb wiederum zur Er-

- 2 -

höhung der Drehzahl ein geringeres Antriebsmoment ausreicht, als es bei konstantem maximalem Trägheitsmoment vonnöten wäre.

Die markantesten Unterschiede zwischen dem herkömmlich bekannten Schwungrad und dem erfindungsgemäss beschriebenen Schwungrad sind: das herkömmliche Schwungrad hat eine starre Schwungmasse und einen gleichbleibenden Schwungraddurchmesser, demgegenüber besitzt das erfindungsgemäss beschriebene Schwungrad eine variable Schwungmasse und ein in sich selbst veränderlichen Schwungraddurchmesser. Dies hat den Vorteil, dass das Trägheitsmoment vergrössert, respektive verkleinert werden kann, so dass bei Drehzahlabfall durch Belastung die Drehzahl mittels einer kleinen Antriebskarft wieder hergestellt werden kann, indem der Schwungraddurchmesser verkleinert und bei Erreichen der optimalen Drehzahl sich der Schwungraddurchmesser wieder bis auf das Maximum erweitert.

Bei Gebrauch der beschriebenen Einrichtung, erzielt man folgende Vorteile:
Mit einer kleinen Antriebskraft ( Elektromotor oder andere Antriebsquelle ) kann über die Achse 3 eine vorerst kleine Schwungmasse mit kleinem Radumfang 8 in Drehbewegung gebracht werden, wobei nur ein kleines Trägheitsmoment auftritt. Sobald durch die Drehbewegung die Masseteile 1 und 1a infolge der Zentrifugalkraft ausgefahren sind, hat sich auch der Schwungraddurchmesser vergrössert und der Radumfang 9 ist erstellt, wobei sich

- 3 -

gleichzeitig auch das Trägheitsmoment vergrössert hat. Solange die Schwungmasse sich im Solldrehzahlbereich hält, kann die Antriebskraft klein gehalten werden. Bei Drehzahlabfall verkleinert sich der Schwungraddurchmesser automatisch und der Antrieb bringt die verkleinerte Schwungmasse wieder auf die Solldrehzahl, ohne dass ein Unterbruch oder Stillstand eintritt. Diese Schwungraddurchmesservariablilität bringt naturgemäss recht beträchtliche Zentrifugalkräfte, welche sich in kinetische Energie in der Schwungmasse speichert.

Das erfindungsgemässe Verfahren wird unter Bezugnahme auf das in der Zeichnung dargestellte Ausführungsbeispiel der erfindungsgemässen Einrichtung in folgendem beispielsweise erläutert und zwar zeigt:

Fig. 1 Schwungrad im Grundriss im Stillstand, Masseteile sind ins Zentrum gerichtet.

Fig. 2 Schwungrad im Grundriss in Drehbewegung, Masseteile vergrössern den Schwungraddurchmesser infolge der Zentrifugalkraft durch Ausschwenken.

Fig. 3 Schwungrad im Querschnitt im Stillstand, Masseteile sind ins Zentrum gerichtet.

Fig. 4 Schwungrad im Querschnitt in Drehbewegung, Masseteile sind ausgeschwenkt infolge der Zentrifugalkraft, der Schwungraddurchmesser ist vergrössert.

- 4 -

Fig. 5  Schwenkbares Masseteil.

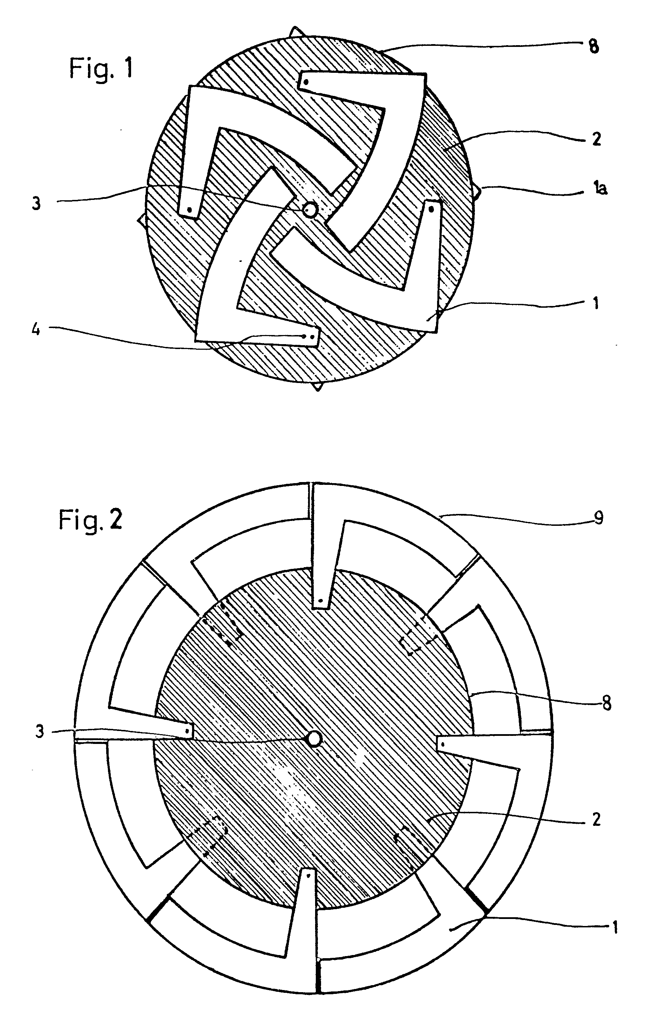

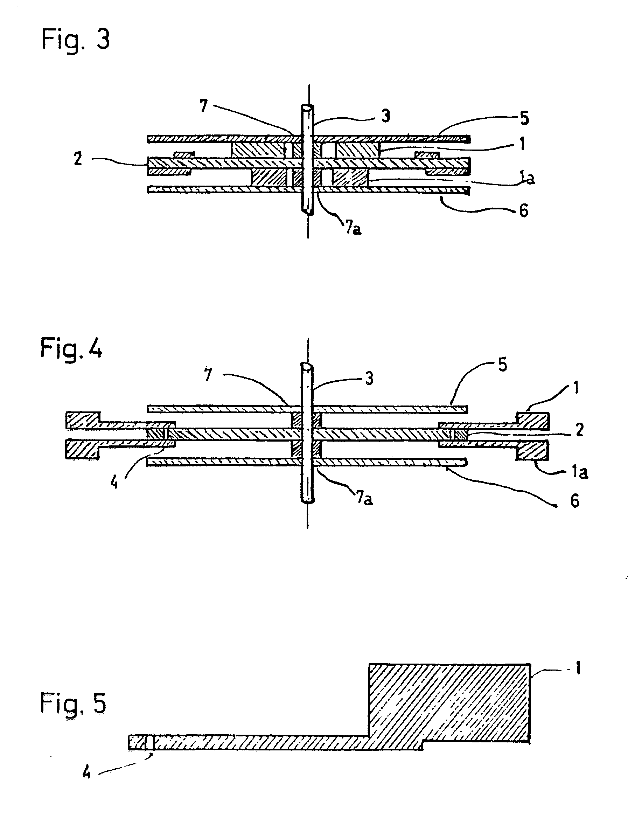

Das in Fig. 1 im Grundriss dargestellte Schwungrad, zeigt wie aus Fig. 3 ersichtlich ist, dass
das Trägerrad 2, je 4 schwenkbare Masseteile 1
oben und je 4 schwenkbare Masseteile 1a unten
aufweist.
Die Masseteile 1 und 1a werden durch Federzug
oder mechanisch-pneumatisch im Stillstand und
bei kleiner Drehzahl im Zentrum gehalten, dadurch
ist der kleine Schwungraddurchmesser und der kleine
Radumfang 8 gegeben. Wird nun das in Fig. 1 und
3 dargestellte Schwungrad in Drehbewegung gebracht, so werden die Masseteile 1 und 1a infolge
der Zentrifugalkraft nach aussen gezogen wie dies
Fig. 2 und 4 zeigen. Durch das Ausschwenken der
oberen und unteren Masseteile 1 und 1a, wird der
Schwungraddurchmesser vergrössert und der Radumfang
9 erstellt, was gleichzeitig eine Vergrösserung des
Trägheitsmomentes bewirkt. In Fig. 4 ist das
Schwungradmasselager 4 dargestellt. Um das obere
und untere Deckrad 5 und 6 mit dem Trägerrad 2
auf der Achse 3 halten zu können, wird jeweils ein
oberes 7 und unteres 7a Abstandslager als Verbindungsglied auf die Achse 3 montiert, wobei die
beiden Abstandslager 7 und 7a gleichzeitig als
Mitnehmer des Trägerrades 2 ausgebildet sind.
Fig. 5 zeigt einen Querschnitt eines Schwungmasseteiles 1 und 1a.
Mit der beschriebenen Einrichtung kann infolge
Energiespeicherung eine verlängerte Energieabnahme erzielt werden. Diese verlängerte Energieabnahme wirkt sich besonders günstig bei einer

- 5 -

elektrischen Antriebskraft aus, insbesonder, wenn der Antriebsmotor durch eine Batterie oder einen Akkumulator gespiesen wird.

Durch den variablen Schwungraddurchmesser wird sowohl das Trägheitsmoment als auch die Zentrifugalkraft recht erheblich verändert.

Die Erhöhung der Speicherung von kinetischer Energie bringt einen besseren Wirkungsgrad als üblich bei und zwar insofern, dass durch die Speicherung von kinetischer Energie eine längere Nutzungsdauer der Antriebskraft möglich ist.

- 6 -

<u>P a t e n t a n s p r ü c h e</u>

1. Verfahren zur Speicherung kinetischer Energie
   in einer Schwungmasse, dadurch gekennzeichnet,
   dass durch Abstandsveränderung von beweglichen
   Masseteilen ( 1, 1a ) der Schwungmasse von der
   Drehachse ( 3 ) der Schwungraddurchmesser und
   damit das Massenträgheitsmoment der gesamten
   Schwungmasse während der Rotation kontinuierlich verändert wird.

2. Verfahren nach Patentanspruch 1, dadurch gekennzeichnet, dass als Antriebsquelle für die
   Rotation der Schwungmasse ein Elektromotor
   verwendet wird, insbesondere gespiesen von
   einer Batterie oder einem Akkumulator.

3. Einrichtung zur Durchführung des Verfahrens
   nach Patentanspruch 1, gekennzeichnet durch
   bewegliche Massenteile ( 1, 1a ) umfassende
   Schwungmasse, wobei die beweglichen Masseteile ( 1, 1a ) der kontinuierlichen Veränderung des Massenträgheitsmomentes der gesamten Schwungmasse zwischen zwei Extremwerten
   dienen.

4. Einrichtung nach Patentanspruch 3, gekennzeichnet durch eine mechanische oder pneumatische Vorrichtung, insbesondere Federzug,
   die dazu dient, beim Stillstand und bei kleiner
   Drehzahl die beweglichen Masseteile ( 1, 1a )
   gegen das Drehzentrum hin zu halten.

5. Einrichtung nach Patentanspruch 3, gekennzeichnet durch ein horizontal oder vertikal angeordnetes Schwungrad.

6. Einrichtung nach Patentanspruch 3, gekennzeichnet durch ein Schwungrad, bestehend aus einem oberen Deckelement ( 5 ), einem Trägerelement ( 2 ) und einem unteren Deckelment ( 6 ), wobei das Trägerelement ( 2 ) oben und unten je vier ausschwenkbare Schwungmasseteile ( 1, 1a ) aufweist, die der Veränderung des Massenträgheitsmomentes dienen.

7. Einrichtung nach Patentanspruch 3, dadurch gekennzeichnet, dass mehrere Schwungräder mit verschiedenen minimalen Schwungraddurchmessern auf der gleichen Achse angeordnet sind.

Fig. 1

Fig. 2

Fig. 3

Fig. 4

Fig. 5

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 428 323 (HEINE) <br> * Insgesamt * | 1,3-5 |
| | -- | |
| X | DE - A - 2 930 501 (AHLGRIMM) <br> * Ansprüche; Figuren 1,2 * | 1,4-6 |
| | -- | |
| X | DE - A - 2 636 829 (SCHULZE) <br> * Ansprüche; Figuren 1-3 * | 1 |
| | -- | |
| A | US - A - 3 885 814 (RIZZO) | |
| | ---- | |

**KLASSIFIKATION DER ANMELDUNG (Int. Cl.3)**

F 16 F 15/30

**RECHERCHIERTE SACHGEBIETE (Int. Cl.3)**

F 16 F
F 16 C
F 16 H
B 60 K
F 03 G
B 62 M

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-02-1982 | PIRIOU |

EPA form 1503.1   06.78